# EUROPÄISCHE PATENTSCHRIFT

(11) **EP 3 454 440 B1**
(45) Veröffentlichungstag und Bekanntmachung des Hinweises auf die Patenterteilung: **28.05.2025**
(21) Anmeldenummer: 17190315.6
(22) Anmeldetag: 11.09.2017
(51) Int. Cl.: H02G 3/08, H01R 13/527, H02G 9/08, H01R 12/59

(54) **ANSCHLUSSVORRICHTUNG UND ELEKTRISCHE TUNNELINSTALLATION**
CONNECTION DEVICE AND ELECTRICAL TUNNEL INSTALLATION
DISPOSITIF DE CONNEXION ET INSTALLATION ÉLECTRIQUE DE TUNNEL

(43) Veröffentlichungstag der Anmeldung: 13.03.2019
(73) Patentinhaber: Woertz Engineering AG, 4132 Muttenz (CH)
(72) Erfinder: ONODI, Tamas, 8800 Thalwil (CH)
(74) Vertreter: Samson & Partner Patentanwälte mbB

(56) Entgegenhaltungen:
- EP-A1- 2 568 542
- EP-A1- 2 928 025
- WO-A1-94/18815
- DE-B4- 102006 061 789
- US-A- 4 559 973
- RALF HIGGELKE: "EMV- und ESD-Beschichtungen: So halten Gehäuse dicht | DESIGN&ELEKTRONIK", 28 September 2011 (2011-09-28), XP055458230, Retrieved from the Internet <URL:http://www.elektroniknet.de/design-elektronik/elekromechanik/so-halten-gehaeuse-dicht-82316.html> [retrieved on 20180309]

## Beschreibung

### GEBIET DER ERFINDUNG

Die Erfindung betrifft eine Anschlussvorrichtung und eine elektrische Tunnelinstallation.

### HINTERGRUND DER ERFINDUNG

In Tunnels und Gebäuden sind Sicherheitsinstallationen bekannt, bei denen eine Vielzahl von verteilt angeordneten elektrischen Verbrauchern, wie beispielsweise Leuchten, mit Abzweigleitungen an eine Durchgangsleitung angeschlossen ist. Die Durchgangsleitung dient der gemeinsamen Versorgung dieser typischerweise im Abstand voneinander entlang der Durchgangsleitung angeordneten Verbraucher, die jeweils über eine eigene Abzweigleitungen an die Durchgangsleitung angeschlossen sind. Als Durchgangsleitung kann ein Flachkabel dienen, an das die Abzweigleitung mittels einer Anschlussvorrichtung mit Durchdringungskontakten abisolierfrei an das Flachkabel angeschlossen ist. Eine derartige Installation ist beispielsweise in der Druckschrift EP 2 568 542 A1 beschrieben.

Im Falle eines Kurzschlusses in einer Abzweigleitung sollen bei einer solchen elektrischen Installation sollen diejenigen Verbraucher, die an andere Abzweigleitungen angeschlossen sind, funktionsmäßig nicht beeinträchtigt werden. Beispielsweise bei einem Brand brennen nämlich nach einiger Zeit Isolationen im Verbraucher oder der Abzweigleitung ab und verlieren damit ihre Isolationsfähigkeit; es kommt dann zum Kurzschluss zwischen den nun nicht mehr voneinander isolierten Leitern.

Nach der Norm DIN 410212 zum Funktionserhalt von elektrischen Leitungsanlagen, müssen diese so beschaffen sein, dass die sicherheitstechnischen Anlagen und Einrichtungen im Brandfall ausreichend lang funktionsfähig bleiben. Funktionsanhalt ist nach der Norm gewährleistet, wenn die Leitungen die Prüfanforderungen der Funktionserhaltsklasse E90 bzw. E30 erfüllen, also ein Funktionserhalt von 90 bzw. 30 Minuten gewährleistet wird, bzw.wenn die Leitungen auf Rohdecken unterhalb des Fußbodenestrichs mit einer Dicke von mindestens 30mm oder im Erdreich verlegt werden.

Aus der DE 2 248 276 A1 ist ein elektrochemisches Element bekannt, auf dessen äußeren Oberfläche eine Metallfilm aufgebracht ist, um einen zusätzlichen Schutz gegen Abrasion während der Handhabung zu haben.

EP 2 928 025 A1 betrifft eine Anschlussvorrichtung gemäß dem Oberbegriff des Anspruchs 1 mit einem Anschlussvorrichtungsgehäuse, welches den Durchtritt eines Flachkabels erlaubt sowie eine abisolierfreie Kontaktierung desselben. Die Anschlussvorrichtung weist eine Abzweigleitungsbuchse für den Austritt der Abzweigleitung aus der Anschlussvorrichtung auf, wobei die Abzweigleitungsbuchse am Anschlussvorrichtungsgehäuse angeordnet ist. Eine Sicherungsaufnahme ist in einem Abzweigleitungs-Buchsengehäuse angeordnet welche elektrisch eine Trennstelle für abgesicherte Adern der Abzweigleitung bildet. Das Abzweigleitungs-Buchsengehäuse ist öffnungsfähig und der wenigstens eine Sicherungseinsatz ist durch Öffnen des Abzweigleitungs-Buchsengehäuses, ohne Öffnen des Anschlussvorrichtungsgehäuses auswechselbar.

US 4,559,973 A betrifft einen wasserundurchlässigen, wärmeschrumpfbaren Gummi- oder Kunststoffschlauch, wobei eine laminierte Metallfolienschicht, bestehend aus einem Metallfolienfilm mit einer Dicke von 0,01 mm bis 0,1 mm, laminiert auf jede seiner Oberflächen, eine elektrische isolierende oder halbleitende Gummi- oder Kunststofffolie die sich über die gesamte oder teilweise Länge des Rohres und über den gesamten Umfang des Rohres erstreckt, wobei sich die beiden längsseitigen Kanten der laminierten Metallfolienschicht in einer vorbestimmten Breite überlappen und die laminierte Metallfolie Schicht so im Rohr angeordnet ist, dass die Dicke der inneren Rohrschicht innerhalb der laminierten Metallfolienschicht kleiner ist als die Dicke der äußeren Rohrschicht außerhalb der laminierten Metallfolienschicht.

Ralf Higgelke: "EMV- und ESD-Beschichtungen: So halten Gehäuse dicht", Design & Elektronik - Know-how für Entwickler betrifft die Ausrüstung von elektronischen Geräten mit resistenten Antistatikschichten basierend beispielsweise auf Kupfer, Nickel, Graphit oder Silber. Ebenso beschäftigt sich die Schrift mit Speziallacken zum Schutz der Antistatikschichten gegen Abrieb, chemische Zerstörung etc. Es werden ebenfalls leitfähige Acrybeschichtungen für Kunststoffgehäuse beschrieben. Ein mit Silberpartikel und ein mit Nickelpartikel angereichertes Material wird beschrieben.

WO 94/18815 A1 offenbart eine flexible Hülle zum diffusionsdichten Umhüllen von Elektronikbauteilen.

### KURZFASSUNG DER ERFINDUNG

Ein erster Aspekt der Erfindung wird in Anspruch 1 definiert und stellt eine Anschlussvorrichtung, zum Anschließen einer mehradrigen Abzweigleitung an ein Flachkabel dar. Die Anschlussvorrichtung umfasst ein Anschlussvorrichtungsgehäuse, welches den Durchtritt des Flachkabels erlaubt und Durchdringungskontakte zur abisolierfreien Kontaktierung des Flachkabels. Die Durchdringungskontakte sind in dem Anschlussvorrichtungsgehäuse angeordnet sind. Die Anschlussvorrichtung umfasst ferner eine elektrische Trennstelle zwischen der Abzweigleitung und dem Flachkabel. Außerdem umfasst die Anschlussvorrichtung wenigstens eine Dichtung im Bereich wenigstens einer Öffnung des Anschlussvorrichtungsgehäuses zum Schutz gegen Eindringen von Staub und/oder Wasser. Das Anschlussvorrichtungsgehäuse ist wenigstens teilweise aus Kunststoff gefertigt und an seiner Außenseite mit einer Diffusionssperrschicht überzogen. Die Diffusionssperrschicht umfasst mehrere Schichten, wobei eine dieser Schichten eine metallische Schicht aus Aluminium ist.

Ein zweiter Aspekt entsprechend Anspruch 13 betrifft eine elektrische Tunnelinstallation, welche eine durch wenigstens ein Flachkabel gebildete Durchgangsleitung in dem Tunnel, wenigstens einer auf dem Flachkabel montierten Anschlussvorrichtung gemäß dem ersten Aspekt und an der Anschlussvorrichtung angeschlossene Abzweigleitungen umfasst. Die Durchgangsleitung und die wenigstens eine Anschlussvorrichtung sind in dem unteren Teil des Tunnelquerschnitts angeordnet, insbesondere in der unteren Hälfte, dem unteren Drittel, oder dem unteren Vierteil des Tunnelquerschnitts.

### ALLGEMEINE ERLÄUTERUNG, AUCH BETREFFEND FAKULTATIVE AUSGESTALTUNGEN DER ERFINDUNG

Der erste Aspekt der Erfindung wird in Anspruch 1 definiert und betrifft eine Anschlussvorrichtung, zum Anschließen einer mehradrigen Abzweigleitung an ein Flachkabel.

Bei der Abzweigleitung handelt es sich i.A. um ein (nicht brandfest) ausgebildetes Rundkabel, dessen Adern in üblicher Weise verdreht in Kabellängsrichtung verlaufen. "Ader" bezeichnet hier einen Aderleiter mitsamt seiner Aderisolierung. Brandtypische Temperaturen können die Aderisolierung der Abzweigleitung beschädigen, wodurch eventuell ein oder mehrere Aderleiter des Flachkabels oder der Abzweigleitung miteinander elektrisch in Kontakt kommen. Es entstünde so ein Kurzschluss. Auch ein defekter Verbraucher, der an die Abzweigleitung angeschlossen ist kann einen Kurzschluss verursachen. Dieser würde - wenn er auch die Durchgangsleitung kurzschlösse - zu einem Funktionsverlust der Durchgangsleitung führen. "Funktionsverlust" bedeutet in diesem Zusammenhang, dass auch Verbraucher außerhalb des Brandbereichs nicht mehr durch die Durchgangsleitung mit elektrischer Energie versorgt werden können. Die vorliegende Erfindung soll einen solchen Funktionsverlust verhindern und gerade einen Funktionserhalt im Brandfall im Sinne der oben genannten Normen gewährleisten.

Flachkabel sind Kabel, deren Adern parallel nebeneinander in einer Ebene angeordnet sind. Die parallele Anordnung der Adern macht einen Kurzschluss zwischen den Aderleitern auch im Brandfall im Vergleich zu Rundkabeln unwahrscheinlich.

Die Anschlussvorrichtung zum Anschluss der Abzweigleitung an das Flachkabel umfasst ein Anschlussvorrichtungsgehäuse, welches den Durchtritt des Flachkabels erlaubt. An einer gewünschten Anschlussstelle wird das Flachkabel durch das Gehäuse der Anschlussvorrichtung geführt - es tritt an dem einen Ende des Anschlussvorrichtungsgehäuses ein, und beim anderen Ende wieder aus diesem heraus.

Innerhalb dieses Gehäuses sind Durchdringungskontakte angeordnet, welche das Flachkabel abisolierfrei kontaktieren. Beim abisolierfreien Kontaktieren wird die Isolierschicht, welche eine Ader des Flachkabels umhüllt, beim Herstellen des elektrischen Kontakts mit dem Aderleiter, nicht entfernt. Vielmehr wird die Isolierhülle des Flachkabels und die Aderisolierung einer Ader mittels elektrisch leitfähiger Durchdringungskontakte durchstochen und durch Berührung des wenigstens einen elektrisch leitfähigen Durchdringungskontakts mit dem zu kontaktierenden Aderleiter des Flachkabels die elektrische Verbindung der Anschlussvorrichtung mit der jeweiligen Ader hergestellt. Beispiele für mögliche Durchdringungskontakte sind Kontaktschrauben, welche wenigstens eine Flachkabelader mittig kontaktieren oder Kontaktschrauben mit Schneidgewinde, welche wenigstens eine Flachkabelader seitlich kontaktieren.

Beim Kontaktieren des Flachkabels mittels der Durchdringungskontakte wird durch das Durchstechen des Kabelmantels und der Aderisolation jedoch eine offene Stelle an dem ansonsten meist durch Kunststoffmantel wasserdicht ausgeführtem Kabel geschaffen. An dieser Anzapfstelle kann Wasser zu den Flachkabeladern gelangen und Durchschläge bzw. Kurzschlüsse auslösen. Auch können sich innerhalb der Anschlussvorrichtung befindliche elektrische Leitelemente ohne eigene Isolation, freiliegende metallische Klemmen oder freiliegende metallische Sicherungskontakte befinden. Insgesamt ist daher die Anzapfstelle des Flachkabels innerhalb der Abzweigbuchse eine elektrische "Schwachstelle" die besonders vor Eindringen von Wasser oder Staub zu schützen ist.

Die Anschlussvorrichtung umfasst eine elektrische Trennstelle zwischen der Abzweigleitung und dem Flachkabel. Die elektrische Trennstelle trennt beispielsweise die elektrische Verbindung zwischen jeder Ader des Flachkabels und jeder Ader des Rundkabels. Dafür können Unterbrechungselemente, wie Sicherungen, für jede kontaktierte Ader des Flachkabels vorgesehen sein. Die Unterbrechungselemente können nur für jede spannungsführende Ader (Phasenleiter) des Flachkabels oder für alle Adern des Flachkabels (umfassend auch mögliche Neutralleiter oder Schutzleiter) vorgesehen sein. Mögliche Varianten für Sicherungen als Unterbrechungselemente der Trennstelle sind zylindrische Soffittensicherungen, Bimetall-Sicherungen und dergleichen. Die elektrische Trennstelle ist zwar ein Teil der Anschlussvorrichtung, sie kann jedoch innerhalb oder außerhalb des Anschlussvorrichtungsgehäuses liegen. Jedenfalls liegt die Trennstelle elektrisch zwischen der Abzweigleitung und dem Flachkabel, sie trennt also nach den Durchdringungskontakten aber vor einer Anschlussstelle für die Abzweigleitung.

Die Anschlussvorrichtung umfasst wenigstens eine Dichtung im Bereich wenigstens einer Öffnung des Anschlussvorrichtungsgehäuses zum Schutz gegen Eindringen von Staub und/oder Wasser. Die Anschlussvorrichtung weist Öffnungen auf, die den Durchdritt des Flachkabels erlauben. Diese Öffnungen werden beispielsweise durch jeweils eine zugeordnete Dichtung vor dem Eindringen von Staub und Wasser geschützt. Das Anschlussvorrichtungsgehäuse kann zum Austausch von Sicherungen öffnungsfähig sein. Auch eine solche Öffnung, die dem Austausch von wenigstens einer Sicherung dient ist durch eine zugeordnete Dichtung geschützt. Durch die Dichtung(en) soll ein Schutz vor Eindringen von Staub und Wasser gewährleistet werden, welcher der IP 20 Norm entspricht.

Die wenigstens eine Dichtung ist beispielsweise eine O-Ring artige Dichtung aus z.b. verschiedenen Kautschuk-Arten, Perfluorkautschuk (FFKM oder FFPM), Polyethylen (PE) oder Polytetrafluorethylen (PTFE) oder eingegossenem Silikon. Ebenfalls kann die wenigstens eine Dichtung eine metallisierte Dichtung sein oder eine Labyrinthdichtung. Es können für verschiedene Öffnungen des Anschlussvorrichtungsgehäuses voneinander in der Machart verschiedene Dichtungen vorgesehen sein.

Das Anschlussvorrichtungsgehäuse ist wenigstens teilweise aus Kunststoff gefertigt. Das Anschlussvorrichtungsgehäuse kann also komplett aus Kunststoff gefertigt sein, aber auch Elemente aufweisen, die nicht aus Kunststoff gefertigt sind. Kunststoffe sind gute elektrische Isolatoren und stellen eine gute Wärmedämmung bereit - sie leiten also Wärme nicht gut ins Innere der Anschlussvorrichtung.

Ein Kunststoffgehäuse muss zudem nicht gesondert geerdet werden und ist relativ kostengünstig. Kunststoffe die sich als Material für das Anschlussvorrichtungsgehäuse eignen sind beispielsweise Kunststoffe aus der Gruppe der Polyoefine, wie Polyethylen (PE), Polypropylen (PP), Polymethylpenten (PMP), Polyisobutylen (PIB) oder Polybutylen (PB). Es sind beispielsweise solche Kunststoffe gewählt, aus denen auch bei für den Brandfall typischer Hitzeeinwirkung keine giftigen Dämpfe ausgasen.

Diese Kunststoffe sind außerdem nahezu diffusionsdicht, wenn auch nicht völlig. Kunststoffe nehmen im allgemeinen Wasser auf, aber nicht so viel, dass ihre elektrische Isolationsfähigkeit verloren gehen würde. Dennoch können geringe Mengen von in Kunststoffen eingedrungenes Wasser mit aus dem Kunststoff gelösten Stoffen Kriechströme erzeugen.

Um dies zu unterbinden, ist das Anschlussvorrichtungsgehäuse an seiner Außenseite oder Innenseite mit einer Diffusionssperrschicht überzogen. Die Diffusionssperrschicht umfasst mehrere Schichten, wobei eine dieser Schichten eine metallische Schicht aus Aluminium ist. Die Diffusionssperrschicht dient dazu eine Diffusion von Wasser oder anderen Flüssigkeiten in den Kunststoff des Anschlussvorrichtungsgehäuses bzw. der gesamten Anschlussvorrichtung zu verhindern.

Um diesen Zweck zu erreichen genügt eine atomare Metallschicht bestehend aus wenigen hundert Lagen von Metallatomen. Die Schichtdicke einer solchen atomaren Schicht beträgt einige Nanometer bis wenige hundert Nanometer. So eine Beschichtung kann beispielsweise durch bedampfen der Außenseite des Anschlussvorrichtungsgehäuses erzeugt werden. Ebenso möglich ist eine Herstellung der metallischen Schicht durch Sputterdeposition, plasmaunterstütze chemische Schichtabscheidung angewandt oder dergleichen auf die Außenseite des Anschlussvorrichtungsgehäuses. Als Beschichtungsmetalle eigenen sich beispielsweise Aluminium oder Kupfer.

Die Diffusionssperrschicht aus Metall ist an der Außenfläche des Anschlussvorrichtungsgehäuses aufgebracht.

Die Diffusionssperrschicht erstreckt sich über die gesamte Außenfläche des Anschlussvorrichtungsgehäuses.

In manchen Ausgestaltungen umfasst die Anschlussvorrichtung eine Abzweigleitungsbuchse für den Austritt der Abzweigleitung aus der Anschlussvorrichtung. Die Abzweigleitungsbuchse ist an der Anschlussvorrichtung angebracht. Bei manchen Ausgestaltungen mündet die außen liegende Abzweigleitungsbuchse beispielsweise in eine Bohrung des Gehäuses der Anschlussvorrichtung. Sie nimmt dort beispielsweise elektrische Leitelemente, welche elektrisch zu den Durchdringungskontakten verbunden sind auf. Die Abzweigleitung ist an die Abzweigleitungsbuchse angeschlossen und über die Abzweigleitungsbuchse zu den besagten elektrischen Leitelementen verbunden.

Die Abzweigleitungsbuchse umfasst in solchen Ausgestaltungen ein Abzweigleitungs-Buchsengehäuse, welches wenigstens teilweise aus Kunststoff gefertigt ist. Die elektrische Trennstelle zwischen dem Flachkabel und der Abzweigleitung innerhalb der Anschlussvorrichtung kann anstatt innerhalb des Anschlussvorrichtungsgehäuses beispielsweise auch innerhalb der Abzweigleitungsbuchse liegen.

In Ausgestaltungen mit Abzweigleitungs-Buchsengehäuse ist auch das Abzweigleitungs-Buchsengehäuse an seiner Außenseite mit einer Diffusionssperrschicht überzogen. Die Diffusionssperrschicht umfasst mehrere Schichten wobei eine dieser Schichten eine metallische Schicht aus Aluminium ist.

Alles in Bezug auf die Diffusionssperrschicht des Anschlussvorrichtungsgehäuses beschriebene gilt ebenso für das Abzweigleitungs-Buchsengehäuse. Beide Gehäuse sind beispielsweise komplett aus Kunststoff gefertigt und werden durch Behandlung mit demselben Verfahren mit einer metallischen Schicht überzogen, welche Teil der Diffusionssperrschicht ist.

In manchen Ausgestaltungen ist die metallische Schicht der Diffusionssperrschicht durch Aufdampfen eines Metallfilms auf das Gehäuse der Anschlussvorrichtung und/oder das Abzweigleitungs-Buchsengehäuse hergestellt.

Beim Aufdampfen werden die gewünschten Beschichtungsmaterialien (hier Metalle, beispielsweise Aluminium oder Kupfer) erhitzt, sodass sie verdampfen - oder je nach Metall - sublimieren. Das Beschichtungsmaterial wird dann zu einem Substrat (hier die Außenseite des Gehäuses der Anschlussvorrichtung bzw. in manchen Ausführungsformen des Abzweigleitungs-Buchsengehäuses) geführt und kondensiert dort, wodurch die Beschichtung gebildet wird.

Die Schichtdicke beträgt beim Aufdampfen typischerweise einige Nanometer bis wenige hundert Nanometer. Bereits eine solch dünne Schicht ist dick genug, um Diffusion von Wasser hin zu der Außenseite des Gehäuses bzw. der Gehäuse zu verhindern. Durch die Wahl des Bedampfens als Beschichtungsverfahren wird somit nur gerade so viel metallisches Beschichtungsmaterial verbraucht wie zum Erreichen dieses Zweckes notwendig. Außerdem ist das Bedampfen im Vergleich zu anderen Beschichtungsverfahren wie Sputtern, galvanische Abscheidung oder plasmaunterstütze chemische Schichtabscheidung wenig aufwendig.

In manchen Ausführungen ist die metallische Schicht durch Aufdampfen einer Aluminiumschicht hergestellt.

Aluminium ist beispielsweise neben Flüssigkeiten auch gegenüber Dampf undurchlässig, wodurch auch ein Absetzen von Luftfeuchtigkeit an der Außenseite des Anschlussvorrichtungsgehäuses bzw. Abzweigleitungs-Buchsengehäuses verhindert wird. Aluminium bietet außerdem einen effektiven Korrosionsschutz, weil es bei (eventuell ungewolltem) Luftkontakt relativ leicht oxidiert und sich die dabei entstehende Oxidschicht auch bei Durchdringen derselben selbst erneuert.

Durch die Aluminiumschicht wird die Außenseite des Anschlussvorrichtungsgehäuses bzw. des Abzweigleitungs-Buchsengehäuses effektiv gegen Diffusion von Flüssigkeiten und Korrosion geschützt.

Entsprechend der Erfindung umfasst die Diffusionssperrschicht eine Schutzschicht, welche auf die metallische Schicht aufgebracht ist. Entsprechend der Erf indung ist die Schutzschicht eine Hartlackschicht.

Zweck der Schutzschicht aus Hartlack ist es die Diffusionssperrschicht noch weniger anfällig gegenüber Korrosion zu machen und sie vor Kratzern zu schützen. Ebenso kann eine Oxidation der metallischen Schicht durch Luftsauerstoff durch die auf die metallische Schicht aufgebrachte Schutzschicht verhindert werden.

In manchen Ausgestaltungen ist das Anschlussvorrichtungsgehäuse und/oder das Abzweigleitungs-Buchsengehäuse aus einem Kunststoff gefertigt sind, der Polyethylen umfasst. Polyethylen ist ein sehr guter elektrischer Isolator und weist in Gegenwart elektrischer Felder eine geringe Polarisation auf - hat also geringe dielektrische Verluste (der dielektrische Verlustfaktor liegt bei Polyethylen bei etwa 10⁻⁴).

Werden das Anschlussvorrichtungsgehäuse bzw. das Abzweigleitungs-Buchsengehäuse vollständig oder nahezu vollständig aus Polyethylen hergestellt, wird sichergestellt, dass das Polyethylen so verarbeitet ist, dass - für den Fall, dass es zu einer Beschädigung der Diffusionssperrschicht kommen sollte - keine Wassereinschlüsse im Gehäuse entstehen können. Solche Wassereinschlüsse können sonst zu einem sogenannten "watertree" führen. Elektrische Feldstärke wird hier von in fein durch den im Kunststoff verzweigten Kanälen eingeschlossenem Wasser fokussiert, da die Dielektrizitätskonstante und entsprechend die Polarisation von Wasser im Vergleich zu Kunststoffen wie Polyethylen sehr hoch ist, was zu Mikroentladungen führen kann.

Für die Fertigung Anschlussvorrichtungsgehäuses bzw. des Abzweigleitungs-Buchsengehäuses wird beispielsweise Polyethylen des Typs PE-HD, also Polyethylen mit hoher Dichte verwendet.

In manchen Ausgestaltungen ist die wenigstens eine Dichtung wenigstens zum Teil aus eingegossenem Silikon hergestellt, um eine vollständige Diffusionsdichtheit im Bereich von Öffnungen des Anschlussvorrichtungsgehäuses und/oder des Abzweigleitungs-Buchsengehäuses zu erzielen.

In manchen Ausgestaltungen ist die wenigstens eine Dichtung wenigstens zum Teil aus einer metallisierten Schicht hergestellt, um eine vollständige Diffusionsdichtheit im Bereich von Öffnungen des Anschlussvorrichtungsgehäuses und/oder des Abzweigleitungs-Buchsengehäuses zu erzielen.

Eine metallisierte Dichtung besteht beispielsweise aus einem Weichstoff, wie Gummi, der für die zur Abdichtung notwendige Flexibilität sorgt, dessen Oberfläche metallisiert wird um für die notwendige Festigkeit zu sorgen.

Die metallisierte(n) Dichtung(en) bzw. die Dichtung(en) aus eingegossenem Silikon werden beispielsweise so gewählt, dass sich die Dichtungen an Öffnungen des Anschlussvorrichtungsgehäuses bzw. des Abzweigbuchsengehäuses anschmiegen.

In manchen Ausgestaltungen ist die wenigstens eine Dichtung eine Labyrinthdichtung, wobei eine unvollständige Diffusionsdichtheit im Bereich der Labyrinthdichtung toleriert wird.

Labyrinthdichtungen beruhen im Prinzip auf einer Verlängerung des Strömungswegs durch die abzudichtende Öffnung. Im eigentlichen Sinn sind solche Dichtungen nicht vollständig dicht, solche Dichtungen werden also dann eingesetzt, wenn toleriert wird, dass Diffusion im Bereich der Dichtung stattfindet. Dies ist z.B. der Fall, wenn sich im Bereich der Öffnung des Anschlussvorrichtungsgehäuses bzw. Abzweigleitungs-Buchsengehäuses die weitgehend abgedichtet werden soll ohnehin keine elektrisch leitfähigen Teile, sondern beispielsweise Keramikteile befinden.

In manchen Ausgestaltungen ist die elektrische Trennstelle durch wenigstens eine Sicherung ausgebildet, wobei die Sicherung durch brandtypische Umgebungstemperaturen und/oder durch Überstrom auslösbar ist.

Eine thermisch auslösbare Sicherung beispielsweise trennt die elektrische Verbindung zwischen dem diesseitigen und jenseitigen Abschnitt der Abzweigleitung, wenn die Umgebungstemperatur am Ort des Sicherungseinsatzes einen brandtypischen Wert übersteigt. Eine "brandtypische Umgebungstemperatur" ist eine Temperatur die normalerweise nur im Brandfall erreicht wird.

Ein durch Überstrom auslösbare Sicherung trennt die elektrische Verbindung zwischen Flachkabel und Abzweigleitung beispielsweise dann, wenn ein kurzschlusstypischer Überstrom an der Sicherung anliegt. Bei manchen Ausgestaltungen ist die Abzweigleitung sowohl gegen Überstrom und Übertemperatur abgesichert. Es sind also beispielsweise zwei Sicherungen für jede abgesicherte Ader in Serie geschaltet.

In manchen Ausgestaltungen sind elektrisch leitfähige Teile innerhalb der Anschlussvorrichtung durch feuerbeständige und elektrisch isolierende Teile auch im Brandfall voneinander elektrisch isoliert gehalten. Elektrisch leitfähige Teile innerhalb der Anschlussvorrichtung sind beispielsweise Metallteile, welche die Durchdringungskontakte mit metallischen Anschlussstellen der Abzweigleitung verbinden. Diese Metallteile sind beispielsweise in Formkörper aus Keramik eingebettet. "Keramik" steht in diesem Zusammenhang allgemein für anorganische, nicht-metallische und polykristalline Werkstoffe, die beim Brennen einen Sintervorgang durchlaufen. Materialien wie Glaskeramik und Verbundkeramik fallen auch unter den Begriff "Keramik".

Ein zweiter Aspekt betrifft, wie in Anspruch 13 definiert, eine elektrische Tunnelinstallation, welche Funktionserhalt im Brandfall, also kurzschlussfreie Verbindung der Kabel im Brandfall, gewährleisten soll.

Die elektrische Tunnelinstallation umfasst eine durch wenigstens ein Flachkabel gebildete Durchgangsleitung in dem Tunnel, wenigstens einer auf dem Flachkabel montierten Anschlussvorrichtung gemäß den bereits beschriebenen möglichen Ausgestaltungen und an die Anschlussvorrichtung angeschlossene Abzweigleitungen.

Die Durchgangsleitung stellt eine in elektrischer Hinsicht durchgehende Leitung dar, deren Länge bei manchen Ausgestaltungen im Wesentlichen (eventuell bis auf die Längen von in Endbereichen angeordneten Abzweigleitungen) der Gesamtlänge der elektrischen Installation entspricht. Ist die Durchgangsleitung durch ein Flachkabel gebildet, so entspricht die Länge der Durchgangsleitung beispielsweise der Länge des Flachkabels.

Das Flachkabel hat beispielsweise einen Außenmantel aus Silikonkautschuk, welcher die Aderleiter vor Kontakt mit Staub oder Wasser schützt. Die wenigstens eine Durchgangsleitung wird Beispielsweise durch wenigstens einen Kabelkanal entlang eines Tunnels geführt.

Die Durchgangsleitung und die wenigstens eine Anschlussvorrichtung sind dabei in dem unteren Teil des Tunnelquerschnitts angeordnet sind, insbesondere in der unteren Hälfte, dem unteren Drittel, oder dem unteren Vierteil des Tunnelquerschnitts.

Das Flachkabel ist in dieser Höhe beispielsweise an einer in Längsrichtung entlang der Tunnelwand verlaufenden Kabelpritsche als Kabelkanal geführt. Die Kabelpritsche kann dabei auch noch die Anschlussvorrichtungen aufnehmen.

Grundsätzlich sind die Temperaturen, die bei einem Band in einer Einrichtung wie etwa einem Tunnel herrschen mit Abnehmender Höhe geringer - da die brandbedingt erhitzte Luft in Richtung Tunneldecke aufsteigt - es herrscht im Brandfall also ein Temperaturgradient, der einen möglichst tiefen Einbau einer Durchgangsleitung bzw. Anschlussvorrichtungen zu deren elektrischer Kontaktierung innerhalb des Tunnelquerschnitts in Bezug auf den Temperaturaspekt, günstig macht.

Grundsätzlich tritt jedoch in Tunneln auch ein Feuchtigkeitsgradient der Umgebung auf. Die Feuchtigkeit wird nämlich mit zunehmender Bodennähe stärker bzw. mit zunehmender Tiefe im Boden. Dies ist durch Regenwasser bedingt, das in einen solchen Tunnel eindringt und sich in Bodennähe sammelt, durch Sickerwasser das sich in tieferen Erdschichten sammelt, bzw. auch durch Spritzwasser, beispielsweise von Sprinkleranlagen, welches ebenfalls in Richtung Boden abfließt.

Um Diffusion von Flüssigkeiten durch die Kunststoffschicht möglichst zu verhindern und damit insbesondere die Anzapfstelle des Flachkabels (die Stelle an der die oben erwähnten Durchdringungskontakte den Kabelmantel bzw. die Kabelisolation durchdringen) zu schützen, wird man daher unter Beachtung dieses Schwachpunktes Abzweige von der Durchgangsleitung möglichst in großer Höhe in einem Tunnel vorsehen, d.h. also eher in der oberen Hälfte, bzw. dem oberen Viertel des Tunnelquerschnitts bzw. in unmittelbarer Nähe der Tunneldecke, weil dies in Bezug auf den Feuchtigkeitsaspekt günstig ist.

Je tiefer Durchgangsleitungen bzw. Anschlussvorrichtungen zu deren elektrischer Kontaktierung jedoch verlegt sind, umso wahrscheinlicher wird ein Wasserkontakt dieser Elemente der elektrischen Installation, der bei einer herkömmlichen Durchgangsleitung/Anschlussvorrichtung ausreichen würde um zumindest Kriechströme innerhalb durch das Anschlussvorrichtungsgehäuses, wenn nicht sogar einen Kurzschluss in Umgebung der Anzapfstelle zu verursachen.

Um einen Einbau der als Flachkabels ausgebildeten Durchgangsleitung bzw. der Anschlussvorrichtungen zu deren elektrischer Kontaktierung innerhalb des Tunnels unter Berücksichtigung des Feuchtigkeitsaspekts, innerhalb der unteren Hälfte des Tunnelquerschnitts, insbesondere des unteren Drittels oder des unteren Viertels des Tunnelquerschnitts anzuordnen, also in einer solchen Tiefe, in der die Durchgangsleitung und die Anschlussvorrichtung Temperaturen ausgesetzt sind, die im Vergleich zu Temperaturen in der oberen Tunnelhälfte geringer sind, erst zu ermöglichen, sind Durchgangsleitung bzw. Anschlussvorrichtungen zu deren elektrischer Kontaktierung mit zusätzlichen Maßnahmen gegenüber dem Eindringen von Wasser zu schützen.

Dieser Schutz wird gewährleistet durch eine Ausgestaltung der Anschlussvorrichtung wie sie im Zusammenhang mit dem ersten Aspekt entsprechend Anspruch 1 betreffend die Anschlussvorrichtung bzw. im Zusammenhang mit der Ausbildung des Flachkabels beschrieben wurde. Entscheidend für die (Wasser) Dichtheit und der Kurzschlusssicherheit der Anschlussvorrichtung im Brandfall sind die Wahl eines Anschlussvorrichtungsgehäuse aus Kunststoff dessen Außenseite mit der bereits beschriebenen Diffusionssperrschicht überzogen ist. Die metallische Schicht der Diffusionssperrschicht dient dabei als Hauptbarriere gegen Diffusion.

Da auch bei - im Vergleich zu herkömmlichen elektrischen Installationen in Tunnels tieferer - Verlegung der Durchgangsleitung bzw. Anschlussvorrichtung zu deren elektrischer Kontaktierung Kurzschlüsse beispielsweise in einem Verbraucher bzw. einer Abzweigleitung auftreten können, ist eine elektrische Trennstelle innerhalb der Anschlussvorrichtung vorgesehen, die beispielsweise durch eine oder mehrere Sicherung(en) realisiert ist, die bei Übertemperatur oder Überstrom anspricht.

In manchen Ausgestaltungen umfasst das Flachkabel wenigstens zwei Aderleiter, einen feuerfeste Aderisolierschicht und einen Außenmantel, wobei die Aderisolierschicht im Brandfall keramisierenden Isoliermatierial umfasst und die Aderisolierschicht direkt auf wenigstens einen Aderleiter des Flachkabels aufextrudiert ist und wobei der Außenmantel Silikonkautschuk umfasst. Zusätzlich dazu können die von der keramisierenden Aderisolierschicht umhüllten Aderleiter in einen Zwischenmantel aus Kunststoff eingebettet sein, der seinerseits von dem Außenmantel umschlossen ist. Der Zwischenmantel verleiht dem Flachkabel Steifigkeit und liefert durch seine elastischen Eigenschaften auch im Brandfall genug Anpressdruck um die Aderleiter voneinander beabstandet zu halten.

Die feuerfeste Aderisolierschicht ist beispielsweise ringförmig. Bei der oder den spanungsführenden Adern und optional auch beim Neutralleiter und/oder dem Schutzleiter, also wenigstens bei einer Ader des Flachkabels umfasst die Aderisolierung im Brandfall keramisierendes Isoliermaterial, welches direkt, d.h. ohne zusätzliche Zwischenschicht, auf die Leiteroberfläche extrudiert ist.

Im Brandfall keramisierende Isolierstoffe sind im Stand der Technik bekannt, wie zum Beispiel aus P. Eyerer et al., Polymer Engineering Technologien und Praxis, Springer-Verlag, 2008, S. 111, Stichwort "Keramisierende Polymere", und K. W. Thomson et al., In the firing line, European Coatings Journal, 2006, 12, S. 34-39. Das Isoliermaterial ist beispielsweise ein thermoplastischer Kunststoff mit einem oder mehreren im Brandfall keramisierenden Zusatzstoffen, die bei Abbrennen des Kunststoffs eine keramische Kruste ausbilden. Bei den Zusatzstoffen kann es sich beispielsweise um Silicatmaterial, Metall- oder Halbmetalloxide (wie SiO₂, Al₂O₃), oder andere geeignete keramisierende Materialien, wie Zinkborat, oder Mischungen hiervon handeln. Der keramisierende Kunststoff wird z.B. als Schmelze direkt auf die Oberfläche des Aderleiters aufgebracht, und umschließt die Aderleiter im Querschnitt ringförmig. Wenn im Brandfall der Kunststoff der Aderisolierung abbrennt, bildet der keramisierende Zusatzstoff die besagte isolierende Kruste, die dann noch eine gewisse elektrische Isolation gewährleistet

Für den Fall, dass trotz tieferer Verlegung ein Brand auf das Flachkabel bzw. die Anschlussvorrichtung übergreift bzw. die Temperatur dennoch einen vordefinierten Wert übersteigt, sind - wie bereits erwähnt - beispielsweise in der Anschlussvorrichtung keramische Teile vorgesehen, welche die elektrisch leitfähigen Teile voneinander isoliert halten, während die Aderleiter des Flachkabels mit einer im Brandfall keramisierenden Aderisolierschicht überzogen sind.

### KURZE BESCHREIBUNG DER ZEICHNUNG

Die angefügte Zeichnung veranschaulicht beispielhafte Ausführungsformen der verschiedenen Aspekte der Erfindung. In der Zeichnung zeigen:
- Fig. 1 eine detaillierte, schematische Seitenschnittdarstellung einer Anschlussvorrichtung mit zwei Gehäusen mit jeweils einer zugeordneten Diffusionssperrschicht
- Fig. 2 eine schematische Draufsicht auf eine Anschlussvorrichtung gemäß Fig. 1,
- Fig. 3 eine detaillierte, schematische Seitenschnittdarstellung einer Anschlussvorrichtung mit einem Gehäuse mit Diffusionssperrschicht
- Fig. 4 eine schematische Draufsicht auf eine Anschlussvorrichtung gemäß Fig. 3.
- Fig. 5a - c schematische Schnittdarstellungen verschiedener elektrischer Tunnelinstallationen
- Fig. 6 eine schematische Darstellung einer elektrischen Installation im Brandfall

Die Zeichnung und die Beschreibung der Zeichnung beziehen sich auf Beispiele der Erfindung und nicht auf die Erfindung selbst.

### BESCHREIBUNG VON AUSFÜHRUNGSBEISPIELEN ANHAND DER ZEICHNUNG

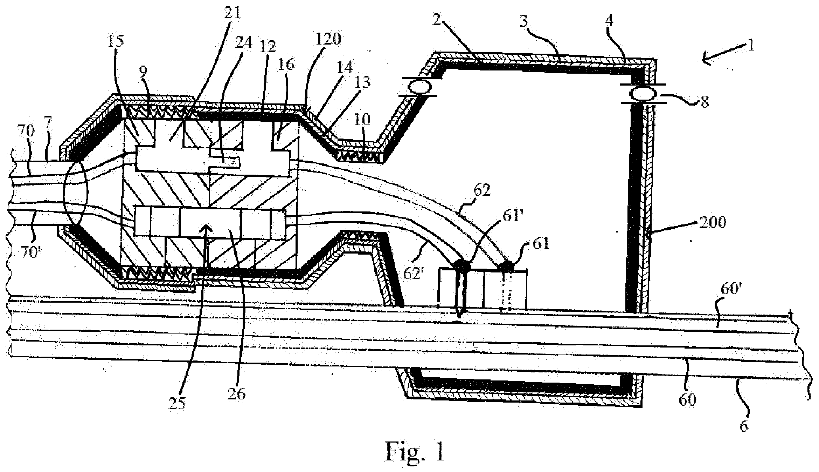

Die Anschlussvorrichtung 1 gemäß Fig.1 kontaktiert Adern eines Flachkabels 60, 60' und stellt eine elektrische Verbindung zwischen den Adern des Flachkabels 60, 60', welche ein Teil des Flachkabels 6 sind, und den Adern der Abzweigleitung 70, 70', welche ein Teil der Abzweigleitung 7 sind, her. Die Adern des Flachkabels 60, 60' werden, hier am Beispiel einer einzelnen Phasenleiterader 60' und einer Neutralleiterader 60 dargestellt, durch Durchdringungskontakte 61, 61' abisolierfrei kontaktiert. Die Durchdringungskontakte 61, 61' sind dabei im Anschlussvorrichtungsgehäuse 2 angeordnet. Das Flachkabel 6 wird hierbei durch das Anschlussvorrichtungsgehäuse 2 geführt.

Ein Durchdringungskontakt 61', der einer Phasenleiterader 60' zugeordnet ist, ist dabei über eine Verbindungsader 62' der Verbindungsleitung mit einem Sicherungseinsatz 26 elektrisch verbunden. Der Sicherungseinsatz 26 stellt eine elektrische Trennstelle zwischen Flachkabel 6 und Abzweigleitung 7, in Bezug auf die Phasenleiterader 60.

Ein eine Neutralleiterader 60 kontaktierender Durchdringungskontakt 61 ist über eine Verbindungsader 62 an eine Neutralleiterkontaktbrücke 21 angeschlossen. Ein Steckkontakt 24 bildet eine mechanische und elektrische Trennstelle 25 in der Neutralleiterkontaktbrücke 21. Sowohl der Sicherungseinsatz 26 als auch die Neutralleiterkontaktbrücke 21 sind dabei im Bereich einer Teilungsfläche zweier keramischer Teilisolierkörper 15 und 16 angeordnet. Jenseits der elektrischen Trennstelle 25 ist die wenigstens eine phasenleitende Ader der Abzweigleitung 70' mit dem Sicherungseinsatz 26 verbunden. Sind mehrere phasenleitende Adern 60 kontaktiert, sind dies durch entsprechend mehrere Sicherungseinsätze 26 von der Abzweigleitung 7 elektrisch trennbar. Der Sicherungseinsatz 26 bzw. die Sicherungseinsätze 26 trennen bei Überstrom bzw. bei brandtypischen Temperaturen. Eine neutralleitende Ader der Abzweigleitung 70 ist an die Neutralleiterkontaktbrücke 21, angeschlossen.

Das Anschlussvorrichtungsgehäuse 2 wird in dem in Fig. 1 gezeigten Ausführungsbeispiel von einer Diffusionssperrschicht des Anschlussvorrichtungsgehäuses 200 an seiner Außenseite umschlossen. Die Diffusionssperrschicht des Anschlussvorrichtungsgehäuses 200 schützt die Anschlussvorrichtung 1 vor Eindringen von Wasser und Staub im Bereich des Anschlussvorrichtungsgehäuses 2 und vermeidet somit Kurzschlüsse, beispielsweise, im Bereich der Durchdringungskontakte 61, 61'. Die Diffusionssperrschicht des Anschlussvorrichtungsgehäuses 200 besteht aus einer aufgedampften Aluminiumschicht 3 und einer Hartlackschicht 4, wobei die Hartlackschicht 4 auf die Aluminiumschicht 3 aufgetragen ist. Die aufgedampfte Aluminiumschicht 3 dient hier als eigentliche Diffusionsbarriere - durch sie können Wasseratome, sei es in gasförmiger (Dampf) oder flüssiger Form (Löschwasser, Spritzwasser, Sickerwasser, natürliche Tunnelfeuchtigkeit) nicht diffundieren. Um diese nur wenige hundert Atomlagen dicke Schicht vor Kratzern, mechanischer Beschädigung bzw Erosion zu schützen, ist die Hartlackschicht 4 auf diese aufgetragen.

Die Dicke der aufgedampften Aluminiumschicht 3 und der Hartlackschicht 4 ist in Fig. 1 nicht realitätsgetreu dargestellt, da die aufgedampften Aluminiumschicht 3 beispielsweise nur einige hundert Atomlagen dick ist. Die Darstellung in Fig. 1 dient vielmehr der Betonung der beiden (Teil)Schichten der Diffusionssperrschicht.

Außerdem ist das Anschlussvorrichtungsgehäuse 2 mit einer Dichtung 8, beispielsweise einer Silikongummi-Dichtung oder eine Labyrinthdichtung, im Bereich des Deckels des Anschlussvorrichtungsgehäuses ausgestattet. Eine solche Dichtung kann, beispielsweise auch im Bereich der Öffnungen des Anschlussvorrichtungsgehäuses, die der Aufnahme des Flachkabels 6 dienen, vorgesehen sein.

Auf das Anschlussvorrichtungsgehäuse 2 ist über ein Schraubgewinde 10 eine Abzweigleitungsbuchse, umfassend ein Abzweigleitungs-Buchsengehäuse 12 angeschraubt. Das Abzweigleitungs-Buchsengehäuse 12 ist aus Kunststoff, beispielsweise ebenfalls Polyethylen, gefertigt. Es bildet die Hülle für die Teilisolierkörper 15, 16, in welche sowohl die Neutralleiterkontaktbrücke 21 als auch der Sicherungseinsatz 26 eingesetzt sind. Der Sicherungseinsatz 26 kann entweder so gestaltet sein, dass er auf Überstrom anspricht oder auch so gestaltet sein, dass er auf brandtypische Temperaturen anspricht.

Auch das Abzweigleitungs-Buchsengehäuse 12 ist in dem in Fig.1 gezeigten Ausführungsbeispiel von einer Diffusionssperrschicht, nämlich der Diffusionssperrschicht des Abzweigleitungs-Buchsengehäuses 120 an seiner Außenseite umschlossen. Die Diffusionssperrschicht des Abzweigleitungs-Buchsengehäuses 120 ist gleich aufgebaut wie die Diffusionssperrschicht des Anschlussvorrichtungsgehäuses, nämlich aus einer aufgedampften Aluminiumschicht 13 und einer Hartlackschicht 14.

Das Abzweigleitungs-Buchsengehäuse 12 kann durch eine Verschlusskappe mit Schraubverschluss 9 geöffnet und verschlossen werden (etwa um ein Auswechseln des Sicherungseinsatzes 26 zu ermöglichen ohne das Anschlussvorrichtungsgehäuse 2 öffnen zu müssen). Diese Kappe ist Teil des Abzweigleitungs-Buchsengehäuses 12 und ist daher entsprechend mit derselben Diffusionssperrschicht 120 überzogen. Durch die Diffusionssperrschicht des Abzweigleitungs-Buchsengehäuses ist die Anschlussvorrichtung 1 gegen ein Eindringen von Wasser/Staub im Bereich der Neutralleiterkontaktbrücke 21 und des Sicherungseinsatzes 26 geschützt.

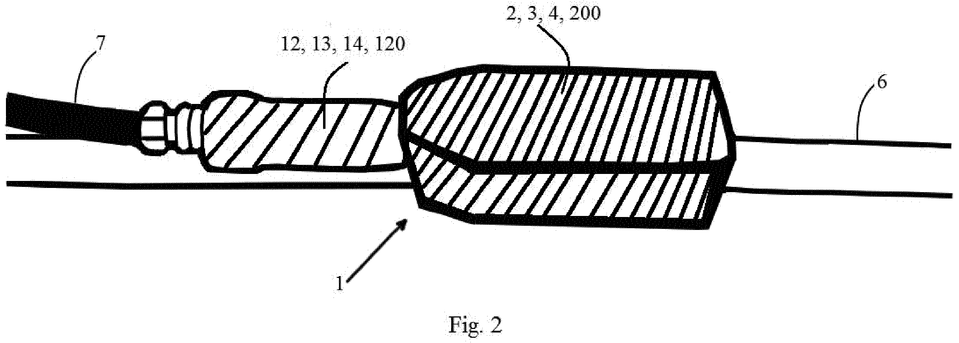

Eine schematische Außenansicht der Anschlussvorrichtung 1, welche die als Flachkabel 6 ausgebildete Durchgangsleitung zu der Abzweigleitung 7 verbindet ist durch Fig. 2 dargestellt. Das Anschlussvorrichtungsgehäuse 2 ist aus Polyethylen gefertigt und ist in dieser Außenansicht nicht sichtbar. Sichtbar ist vielmehr nur die äußerste Schicht der Diffusionssperrschicht des Anschlussvorrichtungsgehäuses 200, nämlich die Hartlackschicht 4. Selbiges gilt für das Abzweigleitungs-Buchsengehäuse 12, hier ist nur die Hartlackschicht 14 der Diffusionssperrschicht des Abzweigleitungs-Buchsengehäuses 120 sichtbar.

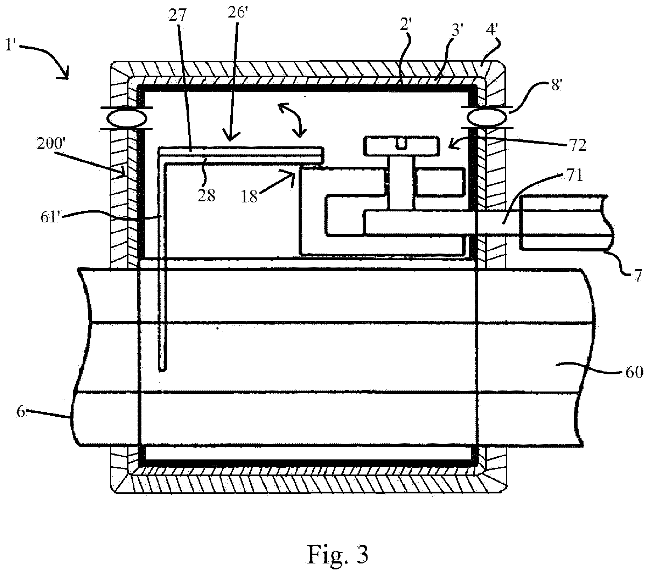

Fig. 3 stellt eine alternative Ausführungsform einer Anschlussvorrichtung 1' dar, nämlich eine Anschlussvorrichtung ohne Abzweigleitungs-Buchse und mit einer elektrischen Trennstelle 18 direkt im Anschlussvorrichtungsgehäuse 2'.

Eine Ader 60 eines durch das Anschlussvorrichtungsgehäuse 2' geführten Flachkabels 6 wird mittels eines Durchdringungskontakts, hier eines Kontaktmessers 61, abisolierfrei kontaktiert. Das Kontaktmesser ist direkt mit einem Bitmetall-Sicherungseinsatz 26', umfassend Bimetallelemente 27, 28, verbunden. Dieser Sicherungseinsatz 26' trennt die elektrische Verbindung zwischen Flachkabel 6 und Abzweigleitung 7, wenn sich die die Bimetallelemente 27, 28 bei brandtypischen Temperaturen, beispielsweise 150°C, von einem elektrischen Kontaktpunkt mit der Schraubklemme 72 wegbiegen. Die Schraubklemme 72 wiederum spannt eine Litze 71 der Abzweigleitung 7 im inneren des Anschlussvorrichtungsgehäuses ein und schließt den Kontakt zu den leitfähigen Bimetallelementen 27, 28 des Bitmetall-Sicherungseinsatzes 26'.

Das aus Kunststoff (Polyethylen) gefertigte Anschlussvorrichtungsgehäuse 2' ist, wie in der vorherigen Ausführungsform, an seiner Außenseite von einer Diffusionssperrschicht 200' umgeben. Die Diffusionssperrschicht 200' umfasst eine erste direkt auf das Anschlussvorrichtungsgehäuse 2' aufgedampfte Aluminiumschicht 3' und eine diese Aluminiumschicht schützend umgebende Hartlackschicht 4'. Wiederum ist eine Dichtung 8, beispielsweise aus Silikongummi oder eine Labyrinthdichtung, im Bereich einer Öffnung des Anschlussvorrichtungsgehäuses 2' Auswechseln der Sicherung bzw. des Kontaktmessers 61' dient angeordnet. Zusätzlich dazu können Dichtungen 8 auch in die Öffnungen zur Durchführung des Flachkabels eingesetzt werden.

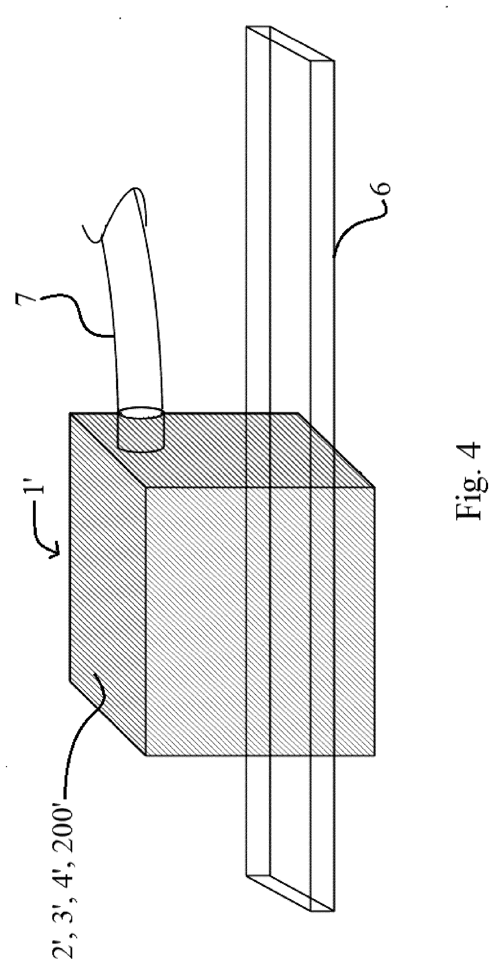

Eine schematische Außenansicht der Anschlussvorrichtung 1', welche die als Flachkabel 6 ausgebildete Durchgangsleitung zu der Abzweigleitung 7 verbindet ist durch **Fig. 4** dargestellt. Das Anschlussvorrichtungsgehäuse aus Polyethylen 2' ist auch in dieser Außenansicht nicht sichtbar. Sichtbar ist vielmehr nur die äußerste Schicht der Diffusionssperrschicht des Anschlussvorrichtungsgehäuses 200', nämlich die Hartlackschicht 4'.

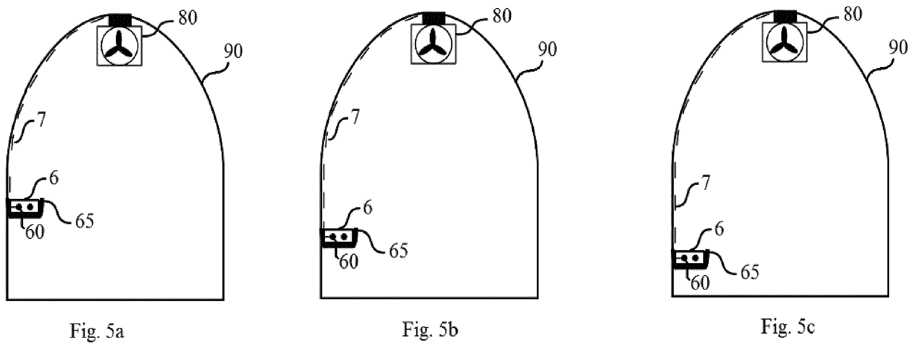

Verschiedene schematische Schnittdarstellungen beispielhafter elektrischer Tunnelinstallationen sind in den **Fig. 5a, 5b, 5c** dargestellt. Die in den Figuren 5a, 5b, 5c skizzierten elektrischen Tunnelinstallationen umfassen eine als Flachkabel 6 ausgeführte Durchgangsleitung, deren wenigstens zwei Kabeladern 60 durch Anschlussvorrichtungen 1, 1' (in den Figuren 5a, 5b, 5c nicht dargestellt) zu wenigstens einer Abzweigleitung 7 verbunden werden. Eine oder mehrere Abzweigleitungen 7 speisen Verbraucher 80 im Tunnel 90, die hier beispielhaft als Tunnelventilator dargestellt sind.

In der in **Fig. 5a** dargestellten elektrischen Tunnelinstallation ist das Flachkabel 6 auf einer Kabelpritsche 65 seitlich entlang des Tunnel 90 verlegt. Die Kabelpritsche 65 ist dabei an der Tunnelwand befestigt. Die Anordnung der Kabelpritsche 65 erfolgt dabei innerhalb des unteren Teils des Tunnelquerschnitts, hier in der unteren Hälfte des Tunnelquerschnitts. Die Abzweigung durch eine Anschlussvorrichtung 1, 1' erfolgt innerhalb der Kabelpritsche - wodurch sich die "Schwachstelle" der Installation, nämlich der Anzapfpunkt, auch innerhalb der Kabelpritsche befindet.

In der in **Fig 5b** schematisch dargestellten elektrischer Tunnelinstallation ist das Flachkabel 6 über eine Kabelpritsche 65 in dem unteren Drittel des Tunnelquerschnitts angeordnet und die Anzapfung findet ebenso in dieser Höhe - durch eine Anschlussvorrichtung 1, 1' innerhalb der Kabelpritsche 65 - statt.

Schließlich gilt für die in **Fig. 5c** schematisch dargestellten Tunnelinstallation das für diejenigen in Fig. 5a bzw. Fig. 5b dargestellten, wobei jedoch das Flachkabel 6 über die Kabelpritsche 65 im unteren Viertel des Tunnelquerschnitts angeordnet ist - wodurch sich der Anzapfpunkt durch die Anschlussvorrichtung 1, 1' ebenfalls in dieser Höhe befindet.

Zwar sind im Brandfall die Temperaturen in den in Figuren 5a - 5c dargestellten Montagehöhen für das Flachkabel 90 und die ebenfalls in der Kabelpritsche 65 befindlichen Anschlussvorrichtungen 1, 1' im Tunnel vorteilhaft, da sie niedriger sind als in einem oberen Teil des Tunnelquerschnitts (beispielsweise dem oberen Drittel oder oberen Viertel des Tunnelquerschnitts) jedoch ist in dieser Höhe die Gefahr, dass beispielsweise in den Tunnel einfließendes Regenwasser zu einer in der Kabelpritsche angeordneten Anschlussvorrichtung 1, 1' gelangt, erhöht.

Um dennoch zu verhindern, dass durch Wasserkontakt beispielsweise von elektrisch leitfähigen Teilen des Flachkabels oder der Anschlussvorrichtung 1, 1' ein Isolationsverlust bzw. ein Kurzschluss entsteht, weist das Flachkabel einen Mantel aus Silikonkautschuk auf, der wasserundurchlässig ist und die Anschlussvorrichtungen 1, 1' sind mit der bereits im Zusammenhang mit der Anschlussvorrichtung 1, 1' beschriebenen Diffusionssperrschicht ausgestattet. Für den Fall, dass ein Kurzschluss an einem Verbraucher 80 stattfindet, der sich in das Flachkabel fortpflanzen könnte - oder etwa bei schweren Bränden, brandtypische Temperaturen auch in Umgebung der Kabelpritsche 65 erreicht werden - sind die Anschlussvorrichtungen 1, 1' wie oben beschrieben mit wenigstens einem Sicherungseinsatz 26, 26 bestückt, der entweder bei brandtypischen Temperaturen oder bei Überstrom die Verbindung zwischen Flachkabel 6 und Abzweigleitung 7 trennt.

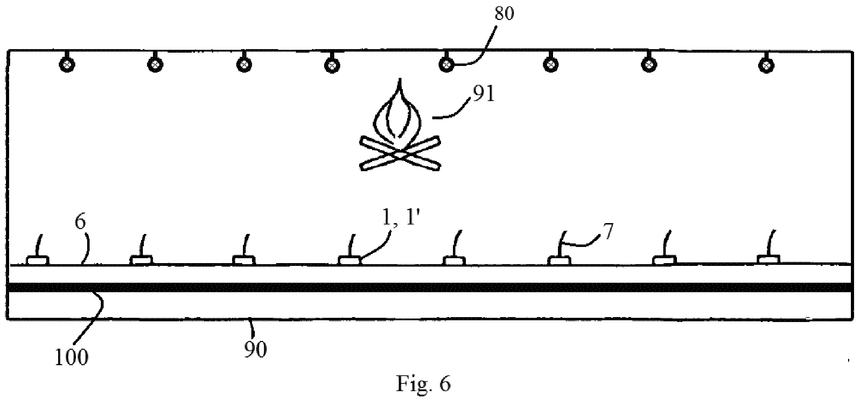

Als Beispiel für die Einwirkung eines Brandes auf eine elektrische Installation ist in **Fig. 6** ein Brand dargestellt. Im Brandfall erstreckt sich der Brandbereich 91 meist nur über eine gewisse Teillänge des Tunnels 90. In Fig. 6 ist exemplarisch ein entlang des Tunnels 90 begrenzter Brandbereich 91 gezeigt, bei dem lediglich zwei Verbraucher 80 von schädlicher Feuer- und Hitzeweinwirkung betroffen ist. Hierbei ist der Brandbereich 91 ein Bereich des Tunnels 1, in dem beispielsweise Temperaturen von mindestens 150° C herrschen.

Um Funktionserhalt der elektrischen Installation zu gewährleisten, sind einerseits die Anschlussvorrichtungen 1, 1' mit einem oder mehreren durch Überstrom und/oder thermisch auslösenden Sicherungseinsätzen 18 ausgerüstet. Fakultativ kann der diesseits dieser Absicherung liegende Teil der Anschlussvorrichtung 6 feuerbeständig ausgeführt sein, dadurch können die Abzweigleitungen 7 aus nicht feuerbeständigem Material ausgeführt sein.

Das Flachkabel 6 und die Anschlussvorrichtungen 1, 1' sind beispielsweise in einer Kabelpritsche (nicht dargestellt) in zehn bis zwanzig Prozent der Tunnelgesamthöhe angeordnet, sodass in diesem Bereich keine brandtypische Temperatur herrscht. Dadurch kann die Entstehung eines Kurzschlusses der aufgrund von Brandeinwirkung - nicht am Verbraucher 80 - sondern an den Anschlussvorrichtungen 1, 1' bzw. dem Flachkabel 6 selbst vermieden werden. Andererseits ist in einer solchen Höhe, wie bereits beschrieben, der Gefahr für einen Kurzschluss bzw. eine Fehlfunktion durch Isolationsverlust durch Wasser größer als wenn Flachkabel 6 und Anschlussvorrichtungen 1, 1' darüber angeordnet wären. Um dies zu verhindern ist das Flachkabel 6, wie oben geschrieben, mit einem Mantel aus Silikonkautschuk ausgestattet und die Anschlussvorrichtungsgehäuse 2, 2' sind an deren Außenseite mit der oben beschriebenen Diffusionssperrschicht überzogen.

## Patentansprüche

1. Anschlussvorrichtung (1) zum Anschließen einer mehradrigen Abzweigleitung an ein Flachkabel (6), umfassend:
ein Anschlussvorrichtungsgehäuse (2), welches den Durchtritt des Flachkabels (6) erlaubt;
Durchdringungskontakte zur abisolierfreien Kontaktierung des Flachkabels (6), wobei die Durchdringungskontakte (61, 61') im Anschlussvorrichtungsgehäuse (2) angeordnet sind;
eine elektrische Trennstelle (25) zwischen der Abzweigleitung (7) und dem Flachkabel (6);
wenigstens eine Dichtung (8) im Bereich wenigstens einer Öffnung des Anschlussvorrichtungsgehäuses (2) zum Schutz gegen Eindringen von Staub und/oder Wasser,
wobei das Anschlussvorrichtungsgehäuse (2) wenigstens teilweise aus Kunststoff gefertigt ist, und
**gekennzeichnet dadurch, dass**
das Anschlussvorrichtungsgehäuse (2) an seiner Außenseite mit einer Diffusionssperrschicht überzogen ist, wobei die Diffusionssperrschicht eine Diffusion von Wasser oder anderen Flüssigkeiten in den Kunststoff der Anschlussvorrichtung verhindert, und
wobei die Diffusionssperrschicht mehrere Schichten umfasst und eine dieser Schichten eine metallische Schicht (3, 3') aus Aluminium ist,
wobei die Diffusionssperrschicht eine Schutzschicht umfasst, welche auf die metallische Schicht aufgebracht ist,
wobei die Schutzschicht eine Hartlackschicht (4, 4') ist.

2. Anschlussvorrichtung (1) nach Anspruch 1, wobei die Anschlussvorrichtung (1) eine Abzweigleitungsbuchse für den Austritt der Abzweigleitung (7) aus der Anschlussvorrichtung (1) umfasst, wobei die Abzweigleitungsbuchse ein Abzweigleitungs-Buchsengehäuse (12) umfasst, wobei die Abzweigleitungsbuchse an der Anschlussvorrichtung angebracht ist, wobei das Abzweigleitungs-Buchsengehäuse (12) wenigstens teilweise aus Kunststoff gefertigt ist und an seiner Außenseite mit einer Diffusionssperrschicht überzogen ist, wobei die Diffusionssperrschicht eine Diffusion von Wasser oder anderen Flüssigkeiten in den Kunststoff des Abzweigleistungs-Buchsengehäuses verhindert, und wobei die Diffusionssperrschicht mehrere Schichten umfasst und eine dieser Schichten eine metallische Schicht aus Aluminium ist, wobei die Diffusionssperrschicht eine Schutzschicht umfasst, welche auf die metallische Schicht aufgebracht ist und, wobei die Schutzschicht eine Hartlackschicht ist.

3. Anschlussvorrichtung (1) nach Anspruch 1 oder 2, wobei das Anschlussvorrichtungsgehäuse (2) und/oder das Abzweigleitungs-Buchsengehäuse aus einem Kunststoff gefertigt sind, der Polyethylen umfasst.

4. Anschlussvorrichtung (1) nach einem der Ansprüche 1 bis 3, wobei die wenigstens eine Dichtung (8) wenigstens zum Teil aus einer metallisierten Schicht hergestellt ist um eine vollständige Diffusionsdichtheit im Bereich von Öffnungen des Anschlussvorrichtungsgehäuses (2) und/oder des Abzweigleitungs-Buchsengehäuses zu erzielen.

5. Anschlussvorrichtung (1) nach einem der Ansprüche 1 bis 4 wobei die wenigstens eine Dichtung (8) eine Labyrinthdichtung ist, wobei eine unvollständige Diffusionsdichtheit im Bereich der Labyrinthdichtung toleriert wird.

6. Anschlussvorrichtung (1) nach einem der Ansprüche 1 bis 3, wobei die elektrische Trennstelle (25) durch wenigstens eine Sicherung ausgebildet ist, wobei die Sicherung durch brandtypische Umgebungstemperaturen und/oder durch Überstrom auslösbar ist.

7. Anschlussvorrichtung (1) nach einem der Ansprüche 1 bis 6, wobei elektrisch leitfähige Teile innerhalb der Anschlussvorrichtung durch feuerbeständige und elektrisch isolierende Teile auch im Brandfall voneinander elektrisch isoliert gehalten sind.

8. Elektrische Tunnelinstallation, umfassend:
- eine durch wenigstens ein Flachkabel (6) gebildete Durchgangsleitung in dem Tunnel;
- wenigstens einer auf dem Flachkabel montierten Anschlussvorrichtung (1) gemäß einem der Ansprüche 1 bis 5;
- an die Anschlussvorrichtung (1) angeschlossene Abzweigleitungen (7),
wobei die Durchgangsleitung und die wenigstens eine Anschlussvorrichtung (1) in dem unteren Teil des Tunnelquerschnitts angeordnet sind, insbesondere in der unteren Hälfte, dem unteren Drittel, oder dem unteren Viertel des Tunnelquerschnitts.

9. Elektrische Tunnelinstallation nach Anspruch 8, wobei das Flachkabel (6) wenigstens einen Aderleiter, eine Aderisolierschicht und einen Außenmantel umfasst, wobei die Aderisolierschicht im Brandfall keramisierenden Isoliermaterial umfasst und die Aderisolierschicht direkt auf wenigstens einen Aderleiter des Flachkabels aufextrudiert ist und wobei der Außenmantel Silikonkautschuk umfasst.

## Claims

1. Connection device (1) for connecting a multi-core branch line to a flat cable (6), comprising:
a connection device housing (2) which allows the flat cable (6) to pass through;
piercing contacts for stripping-free contacting of the flat cable (6), wherein the piercing contacts (61, 61') are arranged in the connection device housing (2);
an electrical disconnection point (25) between the branch line (7) and the flat cable (6);
at least one seal (8) in the area of at least one opening of the connection device housing (2) to protect against the ingress of dust and/or water,
wherein the connection device housing (2) is at least partially made of plastic, and
**characterised in that**
the connection device housing (2) is coated on its outside with a diffusion barrier layer, the diffusion barrier layer preventing diffusion of water or other liquids into the plastic of the connection device, and
wherein the diffusion barrier layer comprises several layers and one of these layers is a metallic layer (3, 3') of aluminium,
wherein the diffusion barrier layer comprises a protective layer which is applied to the metallic layer,
wherein the protective layer is a hard lacquer layer (4, 4').

2. A connection device (1) according to claim 1, wherein the connection device (1) comprises a branch line bushing for the exit of the branch line (7) from the connection device (1), wherein the branch line bushing comprises a branch line bushing housing (12), wherein the branch line bushing is attached to the connection device, wherein the branch line bushing housing (12) is at least partly made of plastic and is coated on its outside with a diffusion barrier layer, wherein the diffusion barrier layer prevents diffusion of water or other liquids into the plastic of the branch line bushing housing, and wherein the diffusion barrier layer comprises several layers and one of these layers is a metallic layer of aluminium, wherein the diffusion barrier layer comprises a protective layer which is applied to the metallic layer and wherein the protective layer is a hard lacquer layer.

3. Connection device (1) according to claim 1 or 2, wherein the connection device housing (2) and/or the branch line bushing housing are made of a plastic comprising polyethylene.

4. Connection device (1) according to one of claims 1 to 3, wherein the at least one seal (8) is at least partly made of a metallised layer in order to achieve complete diffusion tightness in the region of openings of the connection device housing (2) and/or the branch line bushing housing.

5. Connection device (1) according to one of claims 1 to 4, wherein the at least one seal (8) is a labyrinth seal, wherein an incomplete diffusion tightness in the area of the labyrinth seal is tolerated.

6. Connection device (1) according to one of claims 1 to 3, wherein the electrical disconnection point (25) is formed by at least one fuse, wherein the fuse can be triggered by fire-typical ambient temperatures and/or by overcurrent.

7. Connection device (1) according to one of claims 1 to 6, wherein electrically conductive parts within the connection device are kept electrically insulated from each other by fire-resistant and electrically insulating parts, even in the event of fire.

8. Electrical tunnel installation, comprising:
- a through line formed by at least one flat cable (6) in the tunnel;
- at least one connection device (1) according to one of claims 1 to 5 mounted on the flat cable;
- branch lines (7) connected to the connection device (1),
wherein the through line and the at least one connecting device (1) are arranged in the lower part of the tunnel cross-section, in particular in the lower half, the lower third or the lower quarter of the tunnel cross-section.

9. Electrical tunnel installation according to claim 8, wherein the flat cable (6) comprises at least one core conductor, a core insulating layer and an outer sheath, wherein the core insulating layer comprises insulating material which ceramises in the event of fire and the core insulating layer is extruded directly onto at least one core conductor of the flat cable and wherein the outer sheath comprises silicone rubber.

## Revendications

1. Dispositif de raccordement (1) pour raccorder une ligne de dérivation à brins multiples à un câble plat (6), comprenant :
un boîtier de dispositif de raccordement (2) qui permet le passage du câble plat (6) ;
des contacts de pénétration pour la mise en contact sans dénudage du câble plat (6), dans lequel les contacts de pénétration (61, 61') sont disposés dans le boîtier de dispositif de raccordement (2) ;
un point de sectionnement électrique (25) entre la ligne de dérivation (7) et le câble plat (6) ;
au moins un joint d'étanchéité (8) dans la zone d'au moins une ouverture du boîtier de dispositif de raccordement (2) pour la protection contre l'infiltration de poussière et/ou d'eau,
dans lequel le boîtier de dispositif de raccordement (2) est fabriqué au moins en partie à partir de matière plastique, et
**caractérisé en ce que**
le boîtier de dispositif de raccordement (2) est recouvert sur sa face extérieure d'une couche pare-diffusion, dans lequel la couche pare-diffusion empêche une diffusion d'eau ou d'autres liquides dans la matière plastique du dispositif de raccordement, et
dans lequel la couche pare-diffusion comprend plusieurs couches et l'une de ces couches est une couche métallique (3, 3') en aluminium,
dans lequel la couche pare-diffusion comprend une couche de protection qui est appliquée sur la couche métallique,
dans lequel la couche de protection est une couche de vernis dur (4, 4').

2. Dispositif de raccordement (1) selon la revendication 1, dans lequel le dispositif de raccordement (1) comprend une prise de ligne de dérivation pour la sortie de la ligne de dérivation (7) hors du dispositif de raccordement (1), dans lequel la prise de ligne de dérivation comprend un boîtier de prise de ligne de dérivation (12), dans lequel la prise de ligne de dérivation est installée sur le dispositif de raccordement, dans lequel le boîtier de prise de ligne de dérivation (12) est fabriqué au moins en partie à partir de matière plastique et est recouvert sur sa face extérieure d'une couche pare-diffusion, dans lequel la couche pare-diffusion empêche une diffusion d'eau ou d'autres liquides dans la matière plastique du boîtier de prise de ligne de dérivation, et dans lequel la couche pare-diffusion comprend plusieurs couches et l'une de ces couches est une couche métallique en aluminium, dans lequel la couche pare-diffusion comprend une couche de protection, qui est appliquée sur la couche métallique et dans lequel la couche de protection est une couche de vernis dur.

3. Dispositif de raccordement (1) selon la revendication 1 ou 2, dans lequel le boîtier de dispositif de raccordement (2) et/ou le boîtier de prise de ligne de dérivation sont fabriqués à partir d'une matière plastique, qui comprend du polyéthylène.

4. Dispositif de raccordement (1) selon l'une quelconque des revendications 1 à 3, dans lequel l'au moins un joint d'étanchéité (8) est fabriqué au moins en partie à partir d'une couche métallisée pour obtenir une étanchéité à la diffusion complète dans la zone des ouvertures du boîtier de dispositif de raccordement (2) et/ou du boîtier de prise de ligne dérivation.

5. Dispositif de raccordement (1) selon l'une quelconque des revendications 1 à 4, dans lequel l'au moins un joint d'étanchéité (8) est un joint à labyrinthe, dans lequel une étanchéité à la diffusion incomplète est tolérée dans la zone du joint à labyrinthe.

6. Dispositif de raccordement (1) selon l'une quelconque des revendications 1 à 3, dans lequel le point de sectionnement électrique (25) est réalisé par au moins un fusible, dans lequel le fusible peut être déclenché par des températures ambiantes typiques d'un incendie et/ou par un surcourant.

7. Dispositif de raccordement (1) selon l'une quelconque des revendications 1 à 6, dans lequel les pièces électriquement conductrices sont maintenues, à l'intérieur du dispositif de raccordement, de manière isolée électriquement les unes des autres par des pièces résistantes au feu et électriquement isolantes, même en cas d'incendie.

8. Installation de tunnel électrique, comprenant :
- une ligne de passage dans le tunnel formée par au moins un câble plat (6) ;
- au moins un dispositif de raccordement (1) monté sur le câble plat selon l'une quelconque des revendications 1 à 5 ;
- des lignes de dérivation (7) raccordées au dispositif de raccordement (1), dans laquelle la ligne de passage et l'au moins un dispositif de raccordement (1) sont disposés dans la partie inférieure de la section transversale de tunnel, en particulier dans la moitié inférieure, dans le tiers inférieur, ou dans le quart inférieur de la section transversale de tunnel.

9. Installation de tunnel électrique selon la revendication **8,** dans laquelle le câble plat (6) comprend au moins un conducteur à brin, une couche d'isolation de brin et une gaine extérieure, dans laquelle la couche d'isolation de brin comprend un matériau isolant à céramisation en cas d'incendie et la couche d'isolation de brin est extrudée directement sur au moins un conducteur à brin du câble plat et dans laquelle la gaine extérieure comprend du caoutchouc de silicone.
